# EUROPEAN PATENT SPECIFICATION

(11) **EP 0 493 877 B1**
(45) Date of publication and mention of the grant of the patent: **31.01.1996**
(21) Application number: 91310247.1
(22) Date of filing: 06.11.1991
(51) Int. Cl.: B60K 17/24

(54) **Bearing support**
Lagerstütze
Support pour palier

(30) Priority: 03.01.1991 BR 7100032 U
(43) Date of publication of application: 08.07.1992
(73) Proprietor: INDUSTRIA E COMERCIO DE AUTO PECAS REI LIMITADA, Cajuru (Sao Paulo State) (BR)
(72) Inventor: Carneiro Constancio, Silvio José, Cajuru, (Sao Paulo State) (BR)
(74) Representative: Cheyne, John Robert Alexander Mackenzie

(56) References cited:
- BR-A- 8 301 810
- DE-U- 8 320 195
- GB-A- 2 223 192

## Description

The present invention relates to a bearing support.

Many heavy vehicles such as trucks, buses, military vehicles and agricultural machinery, are equipped with a long and massive drive shaft (normally referred to as a propeller shaft or cardan shaft), to enable connection of the gear box to the differential of the rear axle. As a result it may become necessary to support the drive shaft at an intermediate position along its length. For this, factory made chassis do provide simple vertical plates with openings that house a plurality of ball bearings. These provide a structural support for the drive shaft but fail to absorb any shock transmitted to the shaft as a result of the vibrations associated with normal driving conditions. Consequently, such vibrational shock is transmitted to the vehicle body and this can result, in particular, in fatigue and eventual failure of the drive shaft support and bearing.

BR-A-8301810 discloses a bearing support comprising a rigid mounting body which supports an annular elastomeric vibration damping element having an opening for receiving the drive shaft, the damping element having a mounting flange which is clamped between a support flange of the mounting body and a clamping plate which is releasably secured to the support flange.

According to the present invention the bearing support further comprises a mounting bracket which is adapted for connection to a vehicle, the mounting bracket having oppositely disposed lugs for connection to opposite side of the mounting body, means being provided to enable the mounting body to be fixed to the lugs of the mounting bracket in a variety of rotational orientations relative to the mounting bracket about an axis which extends through both lugs.

The mounting body preferably comprises a cylindrical housing within which the damping element is received, and the support flange may be provided at one end of the housing. A second flange may be provided at the other end of the housing, and these two flanges may be interconnected by mounting elements.

In a preferred embodiment, the opening of the damping element is provided with a core, which receives a bearing sleeve. This core is then provided with a lubricated fitting.

The mounting bracket is adapted to enable connection to a variety of vehicles and connection of the bearing to the bracket can be effected in a variety of positions such that the complete assembly can be installed in many different automobiles.

The complete system comprises a highly adaptable cost effective device to minimise the transmission to the vehicle of vibrations arising in the drive shaft.

For a better understanding of the present invention, and to show how it may be carried into effect, reference will now be made by way of example to the accompanying drawings in which:
Figure 1 shows a bearing for supporting a drive shaft in perspective view, showing the front and top of the assembly;
Figure 2 shows the bearing of claim 1 in perspective view, showing the underneath and back of the assembly.

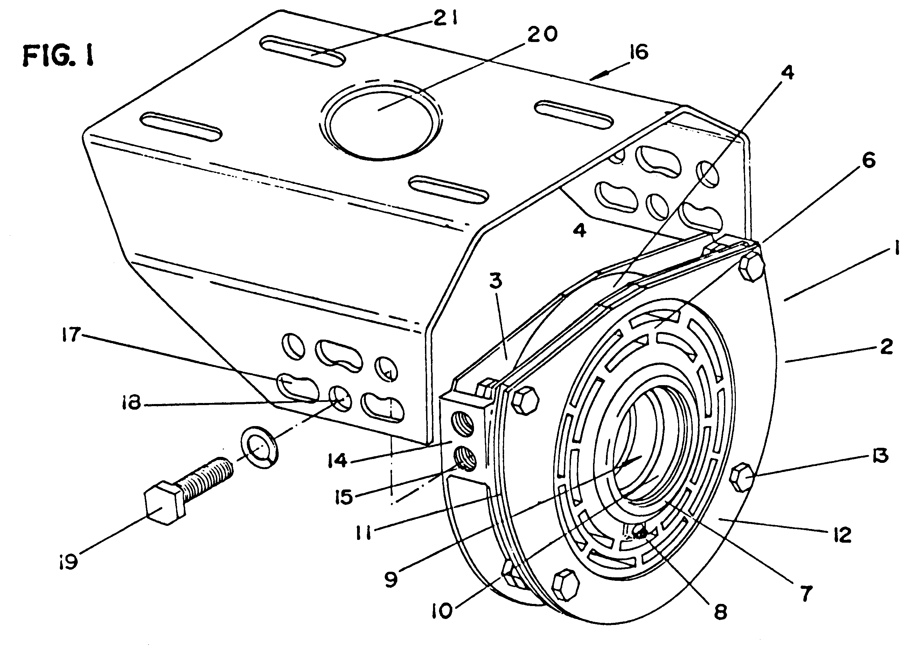

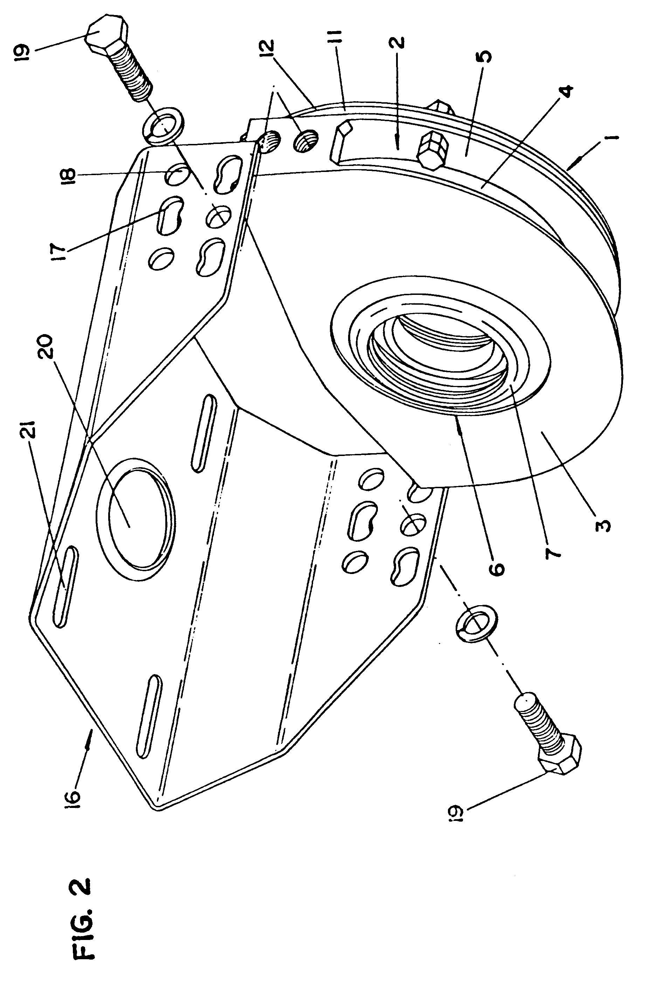

As shown in Figures 1 and 2 a drive shaft support bearing assembly comprises a rigid mounting body 1 and a mounting bracket 16. The mounting body comprises a cylindrical housing 4 within which a damping element 6 is received. At one end of the cylindrical housing 4 there is formed a support flange 2. At the other end of the housing there is provided a second flange 3 which is welded to the housing 4 and is connected to the support flange 2 via two mounting elements 14 which pass between the support flange 2 and the second flange. The mounting elements 14 of the mounting body 1 are provided with threaded apertures 15. The flanges 2 and 3 have the same peripheral shape as each other, the lower periphery being arcuate, while the upper periphery extends across the top of the housing 4. The damping element 6 has a mounting flange 11 which extends parallel to and adjacent the outer face of the support flange 2. This mounting flange 11 is clamped between the support flange 2 of the mounting body 1 and a clamping plate 12 which is releasably secured to the support flange by means of connecting members in the form of nuts and bolts 13 which pass transversely through the clamping plate 12, the damping element flange 11, and the support flange 2. The damping element flange 11 and the clamping plate 12 have the same peripheral shape as the flanges 2 and 3.

The damping element 6 comprises an annular elastomeric unit which houses a core 7 of more rigid material. This core 7 defines an inner housing 9 which receives a bearing sleeve 10. Further, the core 7 is provided with a lubricating fitting 8. The supporting bracket 16 comprises a sheet metal structure having two oppositely disposed lugs which are provided with apertures through which can pass external connecting means such as bolts 19, to engage with the threaded holes 15 of the mounting element 14.

The mounting bracket 16 further comprises a horizontal face which connects the two oppositely disposed lugs. This face is provided with a large central opening 20 and elongate openings 21 through which further connecting members are able to pass and engage with the chassis or body of the vehicle.

The elongate apertures 21 in the top connecting surface of the mounting bracket 16 enable there to be a variety of positions through which the connecting members can pass for connection to the vehicle chassis or body. In this way the mounting bracket 16 can be connected to a variety of vehicles.

The apertures in the oppositely disposed lugs of the mounting bracket 16 comprise a plurality of circular openings 18 and substantially C-shaped openings 17 to enable the connecting members 19 to pass through a variety of positions, such that the position of the mounting body 1 relative to the mounting bracket 16 can be varied. In this way the complete assembly can be adapted to fit to many different makes of automobile.

When installed in a vehicle, this system provides secure support for the drive shaft, while allowing considerable freedom of radial movement of the shaft, and hence providing a means of absorbing shock from vibration of the drive shaft.

This system may be used to provide support for a vehicle drive shaft and absorb vibrational shock in the shaft. The system may also be applied to other fields where there may be undesirable vibration in rotating shafts or where support for a rotating shaft is required for example in the field of machine tools.

## Claims

1. A bearing support comprising a rigid mounting body (1) which supports an annular elastomeric vibration damping element (6) having an opening for receiving the drive shaft, the damping element (6) having a mounting flange (11) which is clamped between a support flange (2) of the mounting body (1) and a clamping plate (12) which is releasably secured to the support flange (2), characterized in that the bearing support further comprises a mounting bracket (16) which is adapted for connection to a vehicle, the mounting bracket (16) having oppositely disposed lugs for connection to opposite side of the mounting body, means being provided to enable the mounting body to be fixed to the lugs of the mounting bracket in a variety of rotational orientations relative to the mounting bracket about an axis which extends through both lugs.

2. A bearing support as claimed in claim 1, characterized in that the said means comprise a respective circular opening and c-shaped opening in each lug, the lugs being fixed to the mounting body by bolts which pass through the respective openings and engage in corresponding threaded bores in the mounting body.

3. A bearing support as claimed in claim 1 or 2, characterized in that the mounting body (1) comprises a cylindrical housing (4) within which the damping element is received, the support flange (2) being provided at one end of the housing.

4. A bearing support as claimed in claim 3, characterized in that a second flange (3) is provided at the other end of the housing.

5. A bearing support as claimed in claim 4, characterized in that the support flange (2) and the second flange (3) are interconnected by mounting elements (14).

6. A bearing support as claimed in any one of the preceding claims, characterized in that a core (9) is provided in the opening of the damping element.

7. A bearing support as claimed in claim 6, characterized in that the core (9) is provided with a lubricating fitting.

8. A bearing support as claimed in claim 6 or 7, characterized in that the core (9) receives a bearing sleeve (10).

## Patentansprüche

1. Lagerträger mit einem steifen Montagekörper (1), der ein ringförmiges, elastisches Vibrationsdämpfungselement (6), mit einer Öffnung zur Aufnahme der Antriebswelle trägt, wobei das Dämpfungselement (6) eine Montagewange (11) aufweist, die zwischen einer Trägerwange (2) des Montagekörpers (1) und einer Klemmplatte (12) geklemmt ist, die lösbar mit der Trägerwange (2) verbunden ist,
dadurch **gekennzeichnet,**
daß der Lagerträger weiterhin einen Montagebügel (16) zur Verbindung mit einem Fahrzeug aufweist, wobei der Montagebügel (16) an abgewandten Enden vorgesehene Ansätze zur Verbindung mit voneinander abgewandten Seiten des Montagekörpers aufweist, wobei Mittel vorgesehen sind, um die Befestigung des Montagekörpers an den Ansätzen den Montagebügel in mehreren Winkelorientierungen bezüglich des Montagebügels um eine sich durch die beiden Ansätze erstreckende Achse ermöglicht ist.

2. Lagerträger nach Anspruch 1,
dadurch **gekennzeichnet,**
daß die Mittel jeweils eine kreisförmige und eine c-förmige Öffnung in jedem Ansatz aufweisen, wobei die Ansätze durch Schrauben an dem Montagekörper befestigt sind, die sich durch die jeweiligen Öffnungen hindurcherstrecken und in entsprechende Gewindebohrungen in dem Montagekörper eingreifen.

3. Lagerträger nach Anspruch 1 oder 2,
dadurch **gekennzeichnet,**
daß der Montagekörper (1) eine zylindrische Aufnahme (4) aufweist, in der das Dämpfungselement aufgenommen ist, wobei die Trägerwange (2) an einem Ende der Aufnahme vorgesehen ist.

4. Lagerträger nach Anspruch 3,
dadurch **gekennzeichnet,**
daß eine zweite Wange (3) an dem anderen Ende der Aufnahme vorgesehen ist.

5. Lagerträger nach Anspruch 4,
dadurch **gekennzeichnet,**
daß die Trägerwange (2) und die zweite Wange (3) miteinander durch Montageelemente (14) verbunden sind.

6. Lagerträger nach einem der vorhergehenden Ansprüche,
dadurch **gekennzeichnet,**
daß eine Kernhülse (9) in der Öffnung des Dämpfungselementes vorgesehen ist.

7. Lagerträger nach Anspruch 6,
dadurch **gekennzeichnet,**
daß die Kernhülse (9) mit einem Schmierelement versehen ist.

8. Lagerträger nach einem der Ansprüche 6 oder 7,
dadurch **gekennzeichnet,**
daß die Kernhülse (9) eine Lagerbuchse (10) aufnimmt.

## Revendications

1. Support de palier comprenant un corps de montage (1) rigide supportant un élément d'amortissement de vibrations (6) annulaire en élastomère, ayant une ouverture pour recevoir l'arbre d'entraînement, l'élément d'amortissement (6) ayant une bride de montage (11) qui est serrée entre une bride de support (2) du corps de montage (1) et une plaque de serrage (12) fixée amovible à la bride de support (2), caractérisé en ce que le support de palier comprend en outre un support de montage (16) adapté pour être connecté à un véhicule, le support de montage (16) ayant des oreilles disposées de manière opposée pour être connectées de côtés opposés du corps de montage, un moyen étant prévu pour permettre au corps de montage d'être fixé aux oreilles du support de montage, selon une quantité d'orientations en rotation par rapport au support de montage, autour d'un axe qui passe par les deux oreilles.

2. Support de palier selon la revendication 1, caractérisé en ce que ledit moyen comprend une ouverture circulaire respective et une ouverture en forme de C dans chaque oreille, les oreilles étant fixées au corps de montage par des boulons qui traversent les ouvertures respectives et s'engagent dans des trous taraudés correspondants ménagés dans le corps de montage.

3. Support de palier selon la revendication 1 ou 2, caractérisé en ce que le corps de montage (1) comprend un boîtier cylindrique (4) dans lequel est logé l'élément d'amortissement, la bride de support (2) étant prévue à une extrémité du boîtier.

4. Support de palier selon la revendication 3, caractérisé en ce qu'une deuxième bride (3) est prévue à l'autre extrémité du boîtier.

5. Support de palier selon la revendication 4, caractérisé en ce que la bride de support (2) et la deuxième bride (3) sont interconnectées par des éléments de montage (14).

6. Support de palier selon l'une quelconque des revendications précédentes, caractérisé en ce qu'un noyau (9) est prévu dans l'ouverture de l'élément d'amortissement.

7. Support de palier selon la revendication 6, caractérisé en ce que le noyau (9) est pourvu d'un raccord de lubrification.

8. Support de palier selon la revendication 6 ou 7, caractérisé en ce que le noyau (9) reçoit un manchon de palier (10).
